# EUROPÄISCHE PATENTSCHRIFT

(11) **EP 2 511 096 B1**
(45) Veröffentlichungstag und Bekanntmachung des Hinweises auf die Patenterteilung: **01.01.2014**
(21) Anmeldenummer: 11162502.6
(22) Anmeldetag: 14.04.2011
(51) Int. Cl.: B41F 23/00, B41F 35/00

(54) **Verfahren zum Einrichten einer Druckanlage zum Bedrucken von Folien und Reinigungsanlage zur Durchführung des Verfahrens**
Method for setting up a printing assembly for printing films and cleaning assembly for performing the method
Procédé d'installation d'une presse pour imprimer des feuilles et installation de nettoyage destinée à l'exécution du procédé

(43) Veröffentlichungstag der Anmeldung: 17.10.2012
(73) Patentinhaber: Nordenia Hungary Kft., 2111 Szada (HU)
(72) Erfinder: Peter, Rolf, 34414 Warburg (DE)
(74) Vertreter: Albrecht, Rainer Harald

(56) Entgegenhaltungen:
- WO-A1-2005/044476
- WO-A2-2010/065270
- JP-A- 1 082 952
- US-A- 3 566 429

## Beschreibung

Die Erfindung betrifft ein Verfahren zum Einrichten einer Druckanlage zum Bedrucken von Folien. Unter den Begriff "Folien" fallen Kunststofffolien für beliebige Verwendungen, insbesondere Verpackungsfolien sowie auch Folienlaminate für Folienetiketten.

Um eine Folienbahn zu bedrucken, muss die Druckvorrichtung zunächst auf die Folienbahn eingestellt werden. Bei diesem Einrichten müssen der Rapport, also die Position und Konstanz des sich entlang der Folienbahn wiederholenden Druckmusters, und der Farbauftrag im Druckwerk eingestellt werden. Häufig wird ein mehrfarbiger Druck unter Verwendung mehrerer Druckwerke vorgesehen, so dass auch die Passgenauigkeit der einzelnen, nacheinander aufgetragenen Druckfarben gewährleistet sein muss. Beim Einrichten einer Druckanlage fällt eine große Menge an Drucksubstrat als Ausschuss an, der entsorgt werden muss und je nach Auftragsmenge einen nicht vernachlässigbaren Anteil eines Druckauftrages ausmacht.

Aus DE 10 2007 009 110 A1 ist es bekannt, zum Einrichten einer Druckanlage eine kostengünstige Polyethylenfolie zu verwenden, die einmal oder, wenn beide Außenflächen bedruckbar sind, auch zweimal eingesetzt wird und nachfolgend entsorgt wird. Die beim Einrichten der Druckanlage zum Andrucken verwendete Folie aus Polyethylen kann umweltschonend entsorgt und auch recycelt werden. Gleichwohl bleibt das Problem, dass beim Einrichten einer Druckanlage durch das Andrucken eine beachtliche Folienmenge als Abfall anfällt, die in der Praxis nicht selten 15 % bezogen auf die in einem Druckauftrag bedruckte Folienmenge beträgt.

Die WO 2010/065270 A offenbart ein Verfahren und eine Vorrichtung zum Reinigen einer Kunststoffbahn ohne Tauchbäder oder Ultraschallreinigung.

Vor diesem Hintergrund liegt der Erfindung die Aufgabe zugrunde, die beim Einrichten einer Foliendruckanlage anfallende und zu entsorgende Abfallmenge an Drucksubstrat zu reduzieren.

Gegenstand der Erfindung und Lösung dieser Aufgabe ist ein Verfahren nach Anspruch 1.

Erfindungsgemäß wird zum Andrucken eine Folienbahn aus einer Kunststofffolie als Drucksubstrat verwendet, welches anschließend von der Druckfarbe gereinigt und erneut als Drucksubstrat eingesetzt wird. Der Begriff "Andrucken" soll alle Druckvorgänge beim Einrichten einer Druckanlage und Probedruck zur Prüfung der Druckqualität umfassen. Zum Einrichten der Druckanlage, insbesondere einer Rotationsdruckanlage, wird erfindungsgemäß ein Sortiment von Standardfolien eingesetzt, die nach dem Einrichten von der Druckfarbe gereinigt werden. Die Folien können dann wieder als Einrichtmaterial verwendet werden. Es versteht sich, dass die zum Andrucken verwendete Kunststofffolie durch das Reinigen angegriffen wird. Doch ist es möglich, die Folie zwischen 10 mal und 30 mal wiederzuverwenden. Typische Folien, die sich als Drucksubstrat zum Andrucken eignen, sind polyolefinische Folien, insbesondere Polyethylenfolien, sowie orientierte Folien wie OPP, PET oder OPA.

Die Reinigung der zum Andrucken verwendeten Kunststofffolie besteht gemäß einer bevorzugten Ausführung der Erfindung aus der Kombination eines chemischen Reinigungsprozesses und einer nachfolgenden mechanischen Reinigung. Die zum Andrucken verwendete bedruckte Folienbahn wird mit einem die Druckfarbe lösenden Reinigungsmittel beaufschlagt und anschließend mechanisch gereinigt. Dabei wird die durch das Reinigungsmittel angelöste Druckfarbe mittels der mechanischen Reinigung von der Folienbahn entfernt. Als Reinigungsmittel eignen sich insbesondere Lösungsmittel, die im Tief- oder Flexodruck eingesetzt werden. Dazu gehören beispielsweise Ethylacetat, Ethoxypropanol, Ethanol, wobei auch destillativ gewonnene Regenerate eingesetzt werden können. Besonders gute Ergebnisse werden mit Ethylacetat erzielt.

Zur mechanischen Reinigung wird die Folienbahn vorzugsweise durch einen Walzenspalt aus mindestens zwei gegenläufig angetriebenen Reinigungswalzen geführt. Die Reinigungswalzen werden rotierend so angetrieben, dass sich an der Folienoberfläche der durch den Walzenspalt geführten Folienbahn eine Relativgeschwindigkeit zwischen der Folienbahn und der die Folienbahn berührenden Walzenoberfläche anstellt. Durch diese Relativgeschwindigkeit wird ein Bürsteffekt bzw. Putzeffekt erzeugt. Die mit der bedruckten Oberfläche der Folienbahn in Kontakt kommenden Reinigungswalzen weisen zweckmäßig eine Oberfläche auf, die einen Abtrag der angelösten Druckfarbe von der Folienoberfläche ermöglicht. Als Reinigungswalzen können insbesondere Bürstenwalzen oder mit Stahlwolle belegte Walzen verwendet werden.

Die Oberfläche der Reinigungswalze wird zweckmäßig mit dem Reinigungsmittel gespült oder in einem Reinigungsbad mit dem Reinigungsmittel beaufschlagt, um anhaftende Druckfarbe zu entfernen und die Oberfläche der Reinigungswalzen sauber zu halten.

Im Anschluss an die mechanische Reinigung werden anhaftendes Reinigungsmittel und Rückstände der Druckfarbe von der Folienbahn abgestreift. Beim Abstreifen wird vorzugsweise zumindest ein Rakel verwendet, welches quer zur Bahnrichtung der Folienbahn oszillierend bewegt wird, um eine Streifenbildung zu vermeiden. Durch das Rakel erfolgt eine Feinreinigung. Es versteht sich, dass anstelle eines Einfachrakels auch ein Doppelrakel oder ein Druckkammerrakel eingesetzt werden kann.

Die gereinigte Folie wird aufgewickelt und steht als Folienwickel zur Wiederverwendung sofort wieder zur Verfügung. Das mit Druckfarbe verunreinigte Reinigungsmittel wird destillativ regeneriert. Etwa zwei Drittel des Lösemittelregenerats kann im Prozess wieder eingesetzt werden. Der restliche Farbschlamm muss entsorgt werden.

Gegenstand der Erfindung ist auch eine Reinigungsanlage nach Anspruch 9 zur Durchführung des beschriebenen Verfahrens. Vorteilhafte Ausgestaltung dieser Reinigungsanlage werden in den Ansprüchen 10 bis 14 beschrieben.

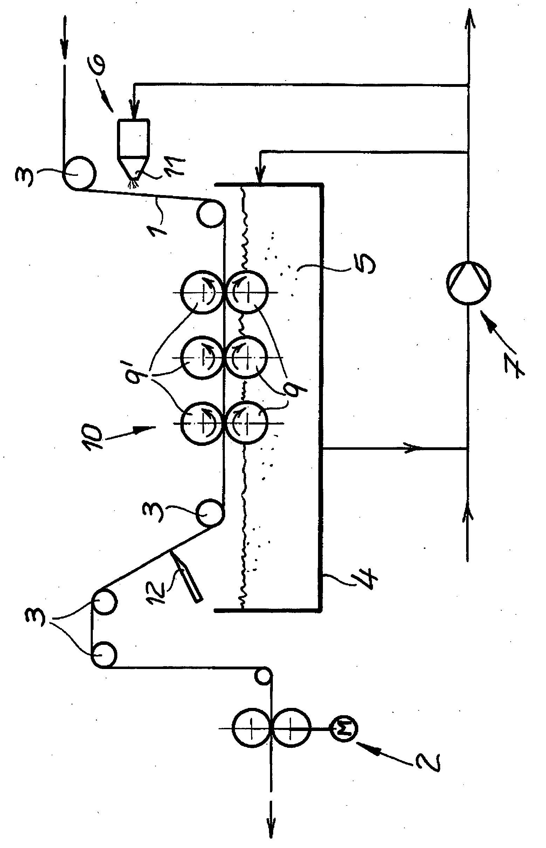

Im Folgenden wird die Erfindung anhand einer lediglich ein Ausführungsbeispiel darstellenden Zeichnung erläutert. Die einzige Figur zeigt eine Reinigungsanlage zum Reinigen einer Folienbahn, die als Drucksubstrat beim Einrichten einer Druckanlage zum Andrucken verwendet wird.

Die in der Figur dargestellte Reinigungsanlage umfasst eine Vortriebseinrichtung für eine Folienbahn 1, die zumindest einem Antrieb 2 sowie eine Mehrzahl von Umlenkrollen 3 zur Bahnführung aufweist, mindestens einen Behälter 4 für ein flüssiges Reinigungsmittel 5, welches an der Folienbahn haftende Druckfarbe löst, eine Einrichtung 6 zur Benetzung der Folienbahn mit dem Reinigungsmittel, eine Einrichtung 7 zur Kreislaufführung des Reinigungsmittels sowie eine Einrichtung 10 mit Reinigungswalzen 9, 9' zur mechanischen Reinigung der Folienbahn 1. Die Folienbahn 1 ist durch einen Walzenspalt zwischen zumindest zwei gegenläufig angetriebenen Reinigungswalzen 9, 9' geführt, wobei die Oberfläche zumindest einer Reinigungswalze 9 der paarweise angeordneten Walzen 9, 9' in ein das Reinigungsmittel 5 enthaltendes Bad eintaucht. Durch die Rotation der Reinigungswalzen 9, 9' wird eine Relativbewegung zwischen der fortlaufend bewegten Folienbahn 1 und der Kontaktfläche der Reinigungswalzen 9, 9' erzeugt. Hierdurch wird ein Wisch- bzw. Putzeffekt auf die bedruckte Folienoberfläche ausgeübt. Die Reinigungswalzen 9, die mit der bedruckten Seite der Folienbahn 1 in Kontakt kommen, können beispielsweise als Bürstenwalzen ausgebildet sein oder an ihrer Oberfläche mit einer Schicht aus Stahlwolle belegt sein.

Eine Einrichtung 6 zur Benetzung der Folienbahn 1 weist Sprühdüsen 11 auf, die in Bahnrichtung der Folienbahn 1 vor der Einrichtung 10 zur mechanischen Reinigung der Folienbahn angeordnet sind. In Bahnrichtung hinter den Reinigungswalzen 9, 9' ist ferner ein Rakel 12 zum Abstreifen von an der Folienbahn haftender Flüssigkeit und Farbrückstände angeordnet. Anstelle eines Einfachrakels kann auch ein Doppelrakel oder ein Druckkammerrakel eingesetzt werden. Das Rakel 12 führt vorzugsweise oszillierende Bewegungen quer zur Bahnrichtung der Folienbahn 1 auf, um eine Streifenbildung auf der Folienbahn zu vermeiden.

Die in der Figur dargestellte Reinigungsanlage dient dazu, eine beim Einrichten einer Druckanlage bedruckte Folienbahn 1 von Druckfarbe zu reinigen, so dass die Folienbahn 1 erneut als Drucksubstrat eingesetzt werden kann. Die bedruckte Folienbahn 1 wird mit einem Reinigungsmittel 5 beaufschlagt, welche die Druckfarbe löst oder zumindest anlöst, und wird anschließend mechanisch gereinigt. Das Reinigungsmittel 5 wird durch Sprühdüsen 11 auf die Folienbahn 1 aufgebracht. Die Folienbahn 1 durchläuft anschließend zur mechanischen Reinigung einen Walzenspalt zwischen den Reinigungswalzen 9, 9', die gegenläufig angetrieben werden. Die Umfangsgeschwindigkeit der Reinigungswalzen unterscheidet sich von der Bahngeschwindigkeit, mit der die Folienbahn 1 durch den Walzenspalt der Reinigungswalzen 9, 9' geführt wird, wodurch ein Bürsteffekt bzw. Putzeffekt an der bedruckten Oberfläche erzeugt wird. Die jeweils untere Reinigungswalze 9 der paarweise angeordneten Reinigungswalzen 9, 9' taucht in das Reinigungsbad ein. Durch eine Benetzung der Oberfläche der Reinigungswalzen 9 mit Reinigungsmittel wird der Löseeffekt auf die Druckfarbe verstärkt. Gleichzeitig hat das Reinigungsmittelbad eine Spülwirkung auf die Oberfläche der Reinigungswalze, so dass die Oberfläche der Reinigungswalzen sich nicht mit anhaftender Druckfarbe zusetzen können. Im Anschluss an die mechanische Reinigung werden anhaftendes Reinigungsmittel und Farbrückstände von der Folienbahn 1 abgestreift. Hierzu wird ein Rakel 12 verwendet, welches quer zur Bahnrichtung der Folienbahn 1 oszillierend bewegt wird. Durch das Rakel 12 wird die gelöste Farbe komplett entfernt. Anschließend wird die gereinigte Folie aufgewickelt und steht zum Andrucken beim Einrichten einer Druckanlage wieder zur Verfügung.

Das mit Druckfarbe verunreinigte Reinigungsmittel kann destillativ regeneriert werden. Etwa zwei Drittel des eingesetzten Reinigungsmittels kann als Regenerat zurückgewonnen und wieder verwendet werden. Der verbleibende Farbschlamm muss entsorgt werden.

Die Folienbahn 1 durchläuft die Reinigungsanlage mit einer Geschwindigkeit von bis zu 100 m/min. Die Folie kann bis zu 30 mal gereinigt und wiederverwendet werden. Typische Folien, die als Drucksubstrate eingesetzt werden, sind Polyethylenfolien und orientierte Folien wie OPP, PET oder OPA. Als Reinigungsmittel sind Lösungsmittel geeignet, die im Tief- oder Flexodruck eingesetzt werden. Dazu gehören beispielsweise Ethylacetat, Ethoxypropanol und Ethanol, wobei Ethylacetat bevorzugt verwendet wird.

## Patentansprüche

1. Verfahren zum Einrichten einer Druckanlage zum Bedrucken von Folien, wobei zum Andrucken eine Folienbahn aus einer Kunststofffolie als Drucksubstrat verwendet wird, **dadurch gekennzeichnet, dass** das Drucksubstrat anschließend von der Druckfarbe gereinigt und erneut als Drucksubstrat eingesetzt wird.

2. Verfahren nach Anspruch 1, **dadurch gekennzeichnet, dass** die bedruckte Folienbahn mit einem die Druckfarbe lösenden Reinigungsmittel beaufschlagt und anschließend mechanisch gereinigt wird, wobei die durch das Reinigungsmittel angelöste Druckfarbe mittels der mechanischen Reinigung von der Folienbahn entfernt wird.

3. Verfahren nach Anspruch 2, **dadurch gekennzeichnet, dass** die Folienbahn zur mechanischen Reinigung durch einen Walzenspalt aus mindestens zwei gegenläufig angetriebenen Reinigungswalzen geführt wird.

4. Verfahren nach Anspruch 3, **dadurch gekennzeichnet, dass** als Reinigungswalzen Bürstenwalzen oder mit Stahlwolle belegte Walzen verwendet werden.

5. Verfahren nach einem der Ansprüche 1 bis 4, **dadurch gekennzeichnet, dass** die Oberfläche der Reinigungswalzen mit dem Reinigungsmittel gespült oder in einem Reinigungsbad mit dem Reinigungsmittel beaufschlagt werden, um anhaftende Druckfarbe zu entfernen.

6. Verfahren nach einem der Ansprüche 1 bis 5, **dadurch gekennzeichnet, dass** im Anschluss an die mechanische Reinigung anhaftendes Reinigungsmittel und Druckfarbe von der Folienbahn abgestreift wird.

7. Verfahren nach einem der Ansprüche 1 bis 6, **dadurch gekennzeichnet, dass** zum Abstreifen ein Rakel verwendet wird, welches quer zur Bahnrichtung der Folienbahn oszillierend bewegt wird.

8. Verfahren nach einem der Ansprüche 1 bis 7, **dadurch gekennzeichnet, dass** mit Druckfarbe verunreinigtes Reinigungsmittel destillativ regeneriert wird.

9. Anlage zur Durchführung des Verfahrens nach einem der Ansprüche 1 bis 8, umfassend eine Druckanlage und eine Reinigungsanlage mit
einer Vortriebseinrichtung für eine Folienbahn (1), die mindestens einen Antrieb (2) sowie eine Mehrzahl von Umlenkrollen (3) zur Bahnführung aufweist,
mindestens einem Behälter (4) für ein flüssiges Reinigungsmittel (5),
einer Einrichtung (6) zur Benetzung der Folienbahn mit dem Reinigungsmittel, welches die an der Folienbahn (1) haftende Druckfarbe löst,
einer Einrichtung (10) mit Reinigungswalzen (9, 9') zur mechanischen Reinigung der Folienbahn (1),
**dadurch gekennzeichnet, dass** die Folienbahn (1) durch einen Walzenspalt zwischen zumindest zwei gegenläufig angetriebenen Reinigungswalzen (9, 9') geführt ist und eine Einrichtung (7) zur Kreislaufführung des Reinigungsmittels aufweist.

10. Anlage nach Anspruch 9, **dadurch gekennzeichnet, dass** die Oberfläche zumindest einer Reinigungswalze (9) der paarweise angeordneten Walzen (9, 9') in ein das Reinigungsmittel (5) enthaltendes Bad eintaucht.

11. Anlage nach Anspruch 9 oder 10, **dadurch gekennzeichnet, dass** die Oberfläche zumindest einer Reinigungswalze (9) der paarweise angeordneten Walzen (9, 9') mit einer Schicht aus Stahlwolle belegt ist.

12. Anlage nach Anspruch 9 oder 10, **dadurch gekennzeichnet, dass** zumindest eine Reinigungswalze (9) der paarweise angeordneten Walzen (9, 9') als Bürstenwalze ausgebildet ist.

13. Anlage nach einem der Ansprüche 9 bis 12, **dadurch gekennzeichnet, dass** die Einrichtung (6) zur Benetzung der Folienbahn Sprühdüsen (11) aufweist, die in Bahnrichtung der Folienbahn (1) vor der Einrichtung (10) zur mechanischen Reinigung der Folienbahn angeordnet sind.

14. Anlage nach einem der Ansprüche 9 bis 13, **dadurch gekennzeichnet, dass** in Bahnrichtung hinter den Reinigungswalzen (9, 9') zumindest ein Rakel (12) zum Abstreifen von an der Folienbahn (1) haftender Flüssigkeit und Druckfarbe angeordnet ist.

## Claims

1. A method for establishing a printing system for printing on films, wherein a film web from a plastic film is used as printing substrate for generating proofs, **characterised in that** the printing substrate is subsequently cleaned to remove the printing ink in order to be reused as printing substrate.

2. The method according to claim 1, **characterised in that** the printed film web is treated with a cleaning agent dissolving the printing ink, and then mechanically cleaned, wherein the printing ink which was partially dissolved by the cleaning agent is removed from the film web by means of the mechanical cleaning process.

3. The method according to claim 2, **characterised in that** the film web is mechanically cleaned by feeding it through a roll nip composed of at least two cleaning rollers driven in opposing directions.

4. The method according to claim 3, **characterised in that** brush rollers or rollers covered with steel wool are used as cleaning rollers.

5. The method according to one of claims 1 to 4, **characterised in that** the surfaces of the cleaning rollers are washed with a cleaning agent or treated in a cleaning bath with the cleaning agent in order to remove adhering printing ink.

6. The method according to one of claims 1 to 5, **characterised in that** following mechanical cleaning, any adhering cleaning agent and printing ink are wiped off the film web.

7. The method according to one of claims 1 to 6, **characterised in that** wiping is effected with the aid of a squeegee which is moved in an oscillating manner transversely to the web direction of the film web.

8. The method according to one of claims 1 to 7, **characterised in that** cleaning agent contaminated with printing ink is regenerated by distillation.

9. A system for performing the method according to one of claims 1 to 8, comprising a printing system and a cleaning system with
equipment driving a film web (1) which comprises at least a drive (2) as well as a plurality of guide rollers (3) for guiding the web,
at least one container (4) for a liquid cleaning agent (5),
a device (6) for wetting the film web with the cleaning agent which dissolves the printing ink adhering to the film web (1),
a device (10) with cleaning rollers (9, 9') for mechanically cleaning the film web (1)
**characterised in that** the film web (1) is guided through a roll nip between at least two cleaning rollers (9, 9') driven in opposite directions and **in that** it comprises a device (7) for circulating the cleaning agent.

10. The system according to claim 9, **characterised in that** the surface of at least one cleaning roller (9) of the rollers (9, 9') arranged in pairs dips into a bath containing the cleaning agent (5).

11. The system according to claim 9 or 10, **characterised in that** the surface of at least one cleaning roller (9) of the rollers (9, 9') arranged in pairs is covered with a layer consisting of steel wool.

12. The system according to claim 9 or 10, **characterised in that** the surface of at least one cleaning roller (9) of the rollers (9, 9') arranged in pairs is configured as a brush roller.

13. The system according to one of claims 9 to 12, **characterised in that** the device (6) for wetting the film web comprises spray nozzles (11) arranged in web direction of the film web (1) ahead of the device (10) for mechanically cleaning the film web.

14. The system according to one of claims 9 to 13, **characterised in that** at least one squeegee (12) is arranged in web direction behind the cleaning rollers (9, 9') for wiping the liquid and printing ink adhering to the film web (1) off the film web.

## Revendications

1. Procédé destiné à installer une installation d'impression pour imprimer des films, lors duquel on utilise comme épreuve un lé de film en un film de matière plastique en tant que substrat d'impression, **caractérisé en ce qu'**on nettoie ensuite l'encre d'impression sur le substrat et on la réutilise en tant que substrat d'impression.

2. Procédé selon la revendication 1, **caractérisé en ce qu'**on soumet le lé de film imprimé à un détergent diluant l'encre d'imprimerie et ensuite à un nettoyage mécanique, l'encre d'imprimerie diluée par le détergent étant ensuite retirée du lé de film au moyen du nettoyage mécanique.

3. Procédé selon la revendication 2, **caractérisé en ce que** pour le nettoyage mécanique, on fait passer le lé de film à travers l'interstice de cylindres composé d'au moins deux cylindres de nettoyage entraînés à contresens.

4. Procédé selon la revendication 3, **caractérisé en ce qu'**on utilise en tant que cylindres de nettoyage des cylindres à brosses ou des cylindres munis de paille de fer.

5. Procédé selon l'une quelconque des revendications 1 à 4, **caractérisé en ce qu'**on lave la surface des cylindres de nettoyage à l'aide du détergent ou on les soumet à un bain nettoyant pour éliminer de l'encre d'imprimerie qui adhère.

6. Procédé selon l'une quelconque des revendications 1 à 5, **caractérisé en ce qu'**à la suite du nettoyage mécanique, on racle du détergent et de l'encre d'imprimerie adhèrent au lé de film.

7. Procédé selon l'une quelconque des revendications 1 à 6, **caractérisé en ce que** pour racler, on utilise une raclette que l'on déplace en oscillant à la transversale de la direction du lé.

8. Procédé selon l'une quelconque des revendications 1 à 7, **caractérisé en ce qu'**on régénère par distillation le détergent souillé par de l'encre d'impression.

9. Installation pour la réalisation du procédé selon l'une quelconque des revendications 1 à 8, comprenant une installation d'impression et une installation de nettoyage avec
un dispositif de poussée pour un lé de film (1), qui comporte au moins un entraînement (2) ainsi qu'une pluralité de rouleaux de renvoi (3) pour guider le lé,
au moins un réservoir (4) pour un détergent (5) liquide,
un dispositif (6) pour humidifier le lé de film avec le détergent qui dissout l'encre d'impression adhérant au lé de film (1),
un dispositif (10) avec des cylindres de nettoyage (9, 9') pour le nettoyage mécanique du lé de film (1),
**caractérisée en ce que** le lé de film (1) est conduit entre au moins deux cylindres de nettoyage (9, 9') entraînés à contresens et comporte un dispositif (7) pour le guidage en circuit du détergent.

10. Installation selon la revendication 9, **caractérisée en ce que** la surface d'au moins un cylindre de nettoyage (9) des cylindres (9, 9') disposés par paires plonge dans un bain contenant le détergent (5).

11. Installation selon la revendicaqtion 9 ou la revendication 10, **caractérisée en ce que** la surface d'au moins un cylindre de nettoyage (9) des cylindres (9, 9') disposés par paires est munie d'une couche de paille de fer.

12. Installation selon la revendication 9 ou la revendication 10, **caractérisée en ce qu'**au moins un cylindre de nettoyage (9) des cylindres (9, 9') disposés par paires est conçu en tant que cylindre à brosses.

13. Installation selon l'une quelconque des revendications 9 à 12, **caractérisée en ce que** l'installation (6) pour humidifier le lé de film comporte des pulvérisateurs (11) qui en direction du lé de film (1) sont disposés à l'avant (10) du nettoyage mécanique du lé de film.

14. Installation selon l'une quelconque des revendications 9 à 13, **caractérisée en ce qu'**à l'arrière des cylindres de nettoyage (9, 9') dans la direction du lé est disposée au moins une raclette (12) pour racler du liquide et de l'encre d'imprimerie adhérant sur le lé de film (1).
